# EUROPÄISCHE PATENTSCHRIFT

(11) **EP 2 999 568 B1**
(45) Veröffentlichungstag und Bekanntmachung des Hinweises auf die Patenterteilung: **04.07.2018**
(21) Anmeldenummer: 13732821.7
(22) Anmeldetag: 23.05.2013
(51) Int. Cl.: B23K 26/03, B23K 26/14

(54) **LASERBEARBEITUNGSDÜSE FÜR EINE LASERBEARBEITUNGSEINRICHTUNG UND LASERBEARBEITUNGSEINRICHTUNG**
NOZZLE FOR A LASER MACHINING DEVICE AND SAID DEVICE
BUSE POUR UNE MACHINE DE TRAVAIL AU LASER ET MACHINE CORRESPONDANTE

(43) Veröffentlichungstag der Anmeldung: 30.03.2016
(73) Patentinhaber: Trumpf Werkzeugmaschinen GmbH + Co. KG, 71254 Ditzingen (DE)
(72) Erfinder: SCHINDHELM, David, 70176 Stuttgart (DE); GREGER, Christian, 70563 Stuttgart (DE); REGAARD, Boris, 70499 Stuttgart (DE)
(74) Vertreter: Kohler Schmid Möbus Patentanwälte
(86) Internationale Anmeldenummer: PCT/EP2013/001519
(87) Internationale Veröffentlichungsnummer: WO 2014/187467

(56) Entgegenhaltungen:
- DE-A1-102011 003 717

## Beschreibung

Die Erfindung betrifft eine Laserbearbeitungsdüse für eine Laserbearbeitungseinrichtung, wobei die Laserbearbeitungseinrichtung zur Prozessüberwachung eine Detektionseinrichtung zur Detektion von Strahlung eines durch die Laserbearbeitungsdüse definierten Prozessbereichs aufweist. Des Weiteren betrifft die Erfindung eine Laserbearbeitungseinrichtung mit einer solchen Laserbearbeitungsdüse sowie ein Verfahren zur Inbetriebnahme einer solchen Laserbearbeitungsdüse an der Laserbearbeitungseinrichtung.

Trotz enormer Fortschritte bei der Steuerung von Laserbearbeitungsprozessen, kann es auch auf modernen Laserbearbeitungsanlagen immer wieder zu fehlerhaften Bearbeitungsergebnissen kommen. Um Fehlprozesse bereits während der Bearbeitung erkennen und eventuelle Abhilfemaßnahmen treffen zu können, ist es bekannt, den Prozessbereich optisch zu überwachen.

Je nachdem, wie die optischen Sensoren angeordnet sind, wird zwischen einer off-axis, quasi-koaxialen und koaxialen Auskopplung der Prozessstrahlung unterschieden. Im Fall der off-axis Auskopplung wird die Strahlung des Bearbeitungsprozesses aus einer Detektionsrichtung beobachtet, welche in einem Winkel von größer als 10° zur Laserstrahlachse verläuft. Bei einer quasi-koaxialen Auskopplung verläuft die Detektionsrichtung in einem Winkel von kleiner als 10° zur Laserstrahlachse. Von einer koaxialen Auskopplung wird gesprochen, wenn die Detektionsrichtung parallel zur Laserstrahlachse verläuft. Insbesondere für die letzte Variante hat sich eine Detektion des Prozesslichtes durch die Laserbearbeitungsdüse hindurch bewährt, da aus dieser Richtung der Prozessbereich besonders ungehindert eingesehen werden kann.

Ein Beispiel für eine Detektionseinrichtung an einer CO₂-Laserschneidanlage, bei welcher eine Detektion des Prozesslichtes durch eine Laserbearbeitungsdüse hindurch erfolgt, wird durch die DE 10 2011 003 717 A1 beschrieben. Die Auskopplung der vom Prozessbereich emittierten bzw. reflektierten Strahlung erfolgt mittels eines teildurchlässigen Umlenkspiegels. Das einfallende CO₂-Laserlicht wird an dem Umlenkspiegel reflektiert. Dahingegen kann die Strahlung von dem Prozessbereich in einem Wellenlängenbereich von 550 bis 2000 nm den Umlenkspiegel passieren. Nachdem das Prozesslicht den teildurchlässigen Umlenkspiegel passiert hat, wird es über weitere optische Elemente schließlich einer hochauflösenden Kamera zugeführt. Die Kamera detektiert die Strahlung bei einer Beobachtungs-Wellenlänge, z. B. im sichtbaren oder nahinfraroten Wellenlängenbereich. Die Aufnahmen der Kamera können zur Prozessüberwachung bzw.- regelung genutzt werden.

Aus der DE 24 50 925 A1 ist ein Lasergerät mit einer Gasdüse bekannt, an welcher ein Kühlsystem angebracht ist. Zum Kontrollieren der Fluchtung eines Laserstrahls relativ zu der Gasdüse wird die von der Gasdüse absorbierte Wärme mittels einer Temperaturmessung des Kühlwassers ermittelt. Die Empfindlichkeit der Messeinrichtung wird durch eine wärmeabsorbierende Schicht an der Innenfläche der Gasdüse gesteigert.

Durch die DE 32 12 314 A1 wird eine Schutzgasdüse eines Schutzgasschweißbrenners beschrieben, welche zur Standzeitverlängerung mit einer Schwarznickelschicht versehen ist.

Ausgehend vom Stand der Technik hat sich die Erfindung zur Aufgabe gesetzt, die Signalqualität der detektierten Strahlung des Prozessbereichs bei zumindest einer Beobachtungs-Wellenlänge zu verbessern.

Gelöst wird die Aufgabe durch eine Laserbearbeitungsdüse mit den Merkmalen von Anspruch 1.

Erfindungsgemäß weist die Oberfläche der Laserbearbeitungsdüse zumindest einen Kontrastabschnitt auf, welcher zumindest für Strahlung bzw. Licht bei einer zur Prozessüberwachung durch eine Detektionseinrichtung geeigneten Beobachtungs-Wellenlänge eine streuende und/oder absorbierende Wirkung aufweist. Eine geeignete Beobachtungs-Wellenlänge ist eine Wellenlänge, bei welcher eine Überwachung eines Laserbearbeitungsprozesses mittels einer Detektionseinrichtung Rückschlüsse auf den Bearbeitungsprozess zulässt. Insbesondere liegt daher eine mögliche Beobachtungs-Wellenlänge im Bereich zwischen 300 bis 3000 nm, welcher sowohl den sichtbaren als auch den nahinfraroten Spektralbereich umfasst.

Die Laserbearbeitungsdüse weist einen metallischen Grundkörper auf, auf dessen Oberfläche zumindest im Kontrastabschnitt eine für Strahlung zumindest bei einer Beobachtungs-Wellenlänge zwischen 300 und 1100 nm und/oder für Strahlung zumindest bei einer Beobachtungs-Wellenlänge zwischen 900 und 1700 nm absorbierende Beschichtung aufgebracht und/oder eine streuende Oberflächenstruktur gebildet ist.

Ein metallischer Grundkörper, insbesondere aus Kupfer, weist eine gute Widerstandsfähigkeit gegen die thermischen und mechanischen Beanspruchungen während der Laserbearbeitung auf. Zudem eignet sich eine Düse mit metallischem Grundkörper für den Einsatz zusammen mit weiterer Sensorik von Laserbearbeitungseinrichtungen, wie beispielsweise einer kapazitiven Abstandssensorik. Insbesondere weist eine absorbierende Beschichtung des Kontrastabschnitts zumindest bei der Beobachtungs-Wellenlänge einen höheren Absorptionsgrad auf als die unbeschichtete Materialoberfläche des metallischen Grundkörpers.

Vorzugsweise erfolgt eine Detektion des Prozesseigenleuchtens bei einer Wellenlänge zwischen 300 und 1100 nm, da für diesen Wellenlängenbereich gut geeignete Silicium-basierte Detektoren zur Verfügung stehen. Ebenfalls bevorzugt erfolgt die Detektion einer Wellenlänge zwischen 900 bis 1700 nm. Für diesen Wellenlängenbereich sind z. B. InGaAs-basierte Detektoren gut geeignet..

Es versteht sich, dass ein optischer Detektor, Sensor bzw. eine Bilderfassungseinrichtung der Detektionseinrichtung nicht nur Strahlung bei genau einer Wellenlänge detektiert. Vielmehr wird- je nach Art des Detektors und eventuell vorgeschalteter Filter - i. d. R. ein schmaler Wellenlängenbereich um eine Beobachtungs-Wellenlänge detektiert.

Jedenfalls sorgt sowohl eine streuende als auch eine absorbierende Wirkung auf die von dem Prozessbereich ausgehende Strahlung bei einer Beobachtungs-Wellenlänge dafür, dass die Strahlung, welche an dem Kontrastabschnitt auf die Düse auftritt, in wesentlich geringerem Umfang zur Detektionseinrichtung hin reflektiert werden kann. Ein Auftreten von störenden Reflexen wird reduziert. Aufgrund der erfindungsgemäßen optischen Eigenschaften des Kontrastabschnittes ist in den Aufnahmen der Detektionseinrichtung die Abbildung des Kontrastabschnittes sehr gut von der Abbildung des Prozessbereichs zu unterscheiden.

Die streuende Wirkung des Kontrastabschnittes kann beispielsweise durch eine Oberflächenstrukturierung erzielt werden. Anstelle einer glatten metallischen Oberfläche weist die Oberfläche der Düse zumindest im Bereich des Kontrastabschnittes eine derartige Rauigkeit auf, dass die Strahlung bei der Beobachtungs-Wellenlänge gestreut wird. Vorteilhafterweise kann eine solche Oberflächenstrukturierung relativ kostengünstig hergestellt werden. Vorzugsweise entspricht das Maß der Rauigkeit zumindest in etwa der Größenordnung der Beobachtungs-Wellenlänge.

Eine absorbierende Wirkung im Sinne der Erfindung ergibt sich insbesondere, wenn der Absorptionsgrad für Strahlung zumindest bei der Beobachtungs-Wellenlänge größer als 0.3 ist. Vorzugsweise liegt der Absorptionsgrad für Strahlung bei zumindest der Beobachtungs-Wellenlänge bei einem Wert größer als 0.5, noch vorteilhafter ist der Absorptionsgrad für Strahlung der Beobachtungs-Wellenlänge größer als 0.7 oder sogar größer als 0.9. Das Entstehen von störenden Reflexen an dem Kontrastabschnitt wird auf diese Weise wirkungsvoll unterbunden.

Vorzugsweise weist der Kontrastabschnitt zumindest bei der Beobachtungs-Wellenlänge einen Reflexionsgrad auf, der sich von dem Reflexionsgrad der Oberfläche des Werkstückes, die ebenfalls durch die Detektionseinrichtung erfasst wird, unterscheidet, vorzugsweise kleiner ist. Insbesondere beträgt der Reflexionsgradunterschied einen Wert von mindestens 0.1, vorzugsweise mindestens 0.3 oder sogar mindestens 0.5,. Dank dieser Maßnahme ergibt sich in der Aufnahme der Detektionseinrichtung ein hoher Kontrast zwischen dem abgebildeten Teil der Düse und der abgebildeten Werkstückoberfläche. Bei einer Detektion durch die Düse hindurch, kann somit z. B. der Durchmesser der prozesszugewandten Düsenöffnung zuverlässig überprüft bzw. sehr genau vermessen werden.

Sehr häufig werden Laserbearbeitungseinrichtungen zur Bearbeitung von z. B. Bau- und/oder Edelstahl eingesetzt. Daher weist im Speziellen der Kontrastabschnitt der Düse für Strahlung bei der Beobachtungs-Wellenlänge einen Reflexionsgrad auf, der sich von dem Reflexionsgrad der Oberfläche von Baustahl und/oder Edelstahl um mindestens 0.1, vorzugsweise mindestens 0.3 oder sogar mindestens 0.5 unterscheidet, insbesondere um diese Werte kleiner ist als dieser.

Der Kontrastabschnitt der Düse ist vorzugsweise derart ausgebildet, dass im Vergleich zu einer Düse ohne Kontrastabschnitt ein geringerer Anteil der Strahlung zumindest bei der Beobachtungswellenlänge durch Reflexion an der Düsenoberfläche zur Detektionseinrichtung gelangen kann. Insbesondere wird dies durch einen Reflexionsgrad des Kontrastabschnitts gemäß den vorstehenden Angaben bezogen auf den Erfassungsbereich der Detektionseinrichtung erreicht.

Besonders wirkungsvoll wird die Signalqualität der von dem Prozessbereich ausgehenden und von einer Detektionseinrichtung detektierten Strahlung im Fall eines bevorzugten Ausführungsbeispiels verbessert, indem der Kontrastabschnitt auf der Düsenoberfläche derart angeordnet ist, dass Strahlung von dem Prozessbereich direkt auf den Kontrastabschnitt auftreffen kann.

Alternativ oder ergänzend ist der Kontrastabschnitt vorzugsweise derart auf der Düsenoberfläche angeordnet, dass der Kontrastabschnitt im Detektions- bzw. Aufnahmebereich einer Detektionseinrichtung zur Detektion von Strahlung eines durch die Laserdüse definierten Prozessbereichs angeordnet werden kann. Dies ist insbesondere dann von Vorteil, wenn die Detektionseinrichtung nicht oder nicht nur zur direkten Betrachtung des unmittelbaren Laserbearbeitungsprozesses sondern (auch) insofern zur Prozessüberwachung dient, dass mittels der Detektionseinrichtung z. B. der Zustand bzw. die Abmessungen der Düse überprüft werden können. Aufgrund des im Aufnahmebereich der Detektionseinrichtung angeordneten Kontrastabschnitts kann folglich eine Vermessung oder Überprüfung des abgebildeten Teils der montierten Düse durch die Detektionseinrichtung während der Laserbearbeitung mit einer höheren Genauigkeit und Zuverlässigkeit erfolgen.

Dies trifft im Speziellen für eine Anordnung des Kontrastabschnittes zu, bei welcher die Strahlung, welche von dem durch die Laserdüse definierten Prozessbereich kommt, direkt auf den Kontrastabschnitt auftreffen kann und durch einmalige Reflexion an dem Kontrastabschnitt zu einer Detektionseinrichtung gelangen kann bzw. könnte, sofern sie nicht an dem Kontrastabschnitt absorbiert bzw. gestreut wird.

Beispielsweise ist bei einer Düse für eine Laserbearbeitungseinrichtung mit einer seitlichen Detektionseinrichtung (off-axis Auskopplung) der Kontrastabschnitt an der Düsenaußenfläche zumindest an derjenigen Seite angeordnet, welche der Detektionseinrichtung zugewandt ist.

Durch die Düse können der Laserstrahl und zusätzlich Prozessgase zum Prozessbereich geführt werden. Zu diesem Zweck weist sie einen Düsenkanal auf, welcher zwischen zwei Düsenöffnungen verläuft. Eine Düsenöffnung ist dem Prozessbereich zugewandt, eine Düsenöffnung ist dem Prozessbereich abgewandt.

Bei einem besonders bevorzugten Ausführungsbeispiel ist die Düse derart ausgebildet, dass die Strahlung des Prozessbereichs mittels der Detektionseinrichtung durch den zwischen zwei Düsenöffnungen verlaufenden Düsenkanal hindurch detektierbar ist. Die Düse ist folglich für den Einsatz auf einer Laserbearbeitungseinrichtung mit koaxialer bzw. quasi-koaxialer Auskopplung des zu detektierenden Prozesslichtes geeignet. Vorzugsweise ist der Kontrastabschnitt in diesem Fall derart an der Düsenkanalwandung angeordnet, dass er ausgehend von derjenigen Düsenöffnung, welche im Betrieb dem Prozessbereich abgewandt ist, sichtbar ist. Die Düse ist folglich derart aufgebaut, dass Strahlung, die an dem Kontrastabschnitt emittiert bzw. reflektiert wird, entgegen der Detektionsrichtung (bei koaxialer Auskopplung parallel zur Laserstrahlachse bzw. zum Verlauf des Düsenkanals) durch die prozessabgewandte Düsenöffnung aus der Düse austreten kann und damit zur Detektionseinrichtung gelangen könnte. Dies ergibt sich insbesondere, wenn der Kontrastabschnitt in einem Neigungswinkel zwischen 0° und 90° gegenüber dem Verlauf des Düsenkanals bzw. der Laserstrahlachse oder der Detektionsrichtung, vorzugsweise in einem Neigungswinkel zwischen 0° und 45°, weiter vorzugsweise in einem Neigungswinkel von 5° bis 15° verläuft.

Im Speziellen ist die prozessabgewandte Düsenöffnung größer als die Öffnungsweite der Düseninnenfläche im Bereich des Kontrastabschnittes und sind zwischen der prozessabgewandten Düsenöffnung und dem Kontrastabschnitt auch keine weiteren Verengungen vorhanden, die den Blick in Detektionsrichtung auf den Kontrastabschnitt versperren. Dank dieser Maßnahme ist der Kontrastabschnitt für eine koaxiale Detektionseinrichtung sichtbar und erhöht aufgrund seines Kontrastes gegenüber dem Prozessbereich z. B. die Auswertbarkeit der Aufnahme der Detektionseinrichtung.

Im Falle eines besonders bevorzugten Ausführungsbeispiels der Erfindung weist der Kontrastabschnitt mittels einer Beschichtung eine absorbierende Wirkung für Strahlung zumindest bei der Beobachtungs-Wellenlänge auf. Die Beschichtung kann speziell für die gewünschte absorbierende Wirkung gewählt werden, wobei die Düse darüber hinaus aus einem oder mehreren anderen Materialien aufgebaut sein kann, die weitere Anforderungen an die Düse, wie Temperaturbeständigkeit usw., erfüllen.

Die absorbierende Beschichtung ist vorzugsweise als glatte Beschichtung ausgebildet, was den Vorteil mit sich bringt, dass der Kontrastabschnitt aufgrund seiner glatten Oberfläche keine störenden Einflüsse auf die Gasströmung durch die Düse hindurch besitzt.

Bei einer vorteilhaften Weiterentwicklung der Erfindung weist zumindest ein im Betrieb dem Prozessbereich zugewandter Teil der Außenfläche der Düse keine Beschichtung wie der Kontrastabschnitt auf. Zum einen ist der während der Bearbeitung dem Werkstück zugewandte Teil der Düsenaußenfläche in besonderem Maße Emissionen ausgesetzt. Sowohl die thermische als auch die mechanische Beanspruchung z. B. durch Spritzer sind dort besonders hoch. Falls an diesem Teil der Düse ebenfalls eine absorbierende Beschichtung aufgebracht wäre, müsste diese zusätzlich zur absorbierenden Wirkung auch noch eine besonders hohe Widerstand kraft gegen thermische und mechanische Beanspruchungen aufweisen. Dies erschwert die Auswahl einer geeigneten Beschichtung. Zum anderen wird häufig der Abstand zwischen der Düse und einem Werkstück durch Kapazitätsmessungen zwischen der Düse und dem Werkstück ermittelt. Eine Beschichtung der Düsenaußenfläche kann unerwünschte Effekte auf die Kapazitätsmessungen haben. Insbesondere ist es vor diesem Hintergrund vorteilhaft, wenn die gesamte Außenfläche der Düse keine Beschichtung entsprechend des Kontrastabschnitts aufweist.

Die Wahl der Wellenlänge, bei welcher eine Detektionseinrichtung den Prozessbereich beobachtet, ist von verschiedenen Aspekten abhängig. Beispielsweise ist maßgeblich, welche Fehlprozesse vor allem festgestellt werden sollen. Generell kann an ein und derselben Laserbearbeitungseinrichtung aber auch Strahlung des Prozessbereichs bei verschiedenen Wellenlängen detektiert werden. Zu diesem Zweck können auch mehrere separate Detektionseinrichtungen vorhanden sein.
Zum einen kann Strahlung detektiert werden, die lediglich an dem Prozessbereich reflektiert wird. Zum anderen kann Strahlung detektiert werden, die im Prozessbereich aufgrund des Laserbearbeitungsprozesses entsteht und emittiert wird. Das emittierte Prozesslicht, das sogenannte Prozesseigenleuchten, ist besonders geeignet, Feststellungen über eventuelle Prozessfehlentwicklungen im Prozessbereich zu treffen.

Durch die absorbierende Wirkung des Kontrastabschnittes wird demnach das Auftreten von störenden Reflexen von emittierter Prozessstrahlung reduziert, die sich besonders gut für eine Prozessüberwachung eignet.
Bei einer bevorzugten Variante ist der Kontrastabschnitt für Strahlung bei einer Beobachtungs-Wellenlänge absorbierend, wohingegen der Kontrastabschnitt Strahlung mit einer Wellenlänge von größer als 2000 nm nicht bzw. nur in einem geringen Umfang absorbiert.
Alternativ oder ergänzend werden störende Einflüsse des Laserstrahls der Laserbearbeitungseinrichtung, für welche die Laserdüse vorgesehen ist, auf die Laserdüse reduziert, wenn der Kontrastabschnitt bei der Wellenlänge des Laserstrahls nicht oder nur in geringem Umfang absorbierend wirkt. Im Speziellen ist der Kontrastabschnitt folglich für Strahlung bei einer Wellenlänge von etwa 10,6 µm und/oder etwa 1,03 µm nicht oder nur in geringem Umfang absorbierend.

Eine absorbierende Wirkung in geringem Umfang liegt dann vor, wenn der Kontrastabschnitt einen Absorptionsgrad von kleiner als 0.5, insbesondere von kleiner als 0.3, aufweist. Keine absorbierende Wirkung liegt insbesondere vor, wenn der Absorptionsgrad der Oberfläche kleiner als 0.1 ist. Dank dieser Maßnahme reflektiert der Kontrastabschnitt einen erheblichen Teil des Laserstrahls oder der Wärmestrahlung des Prozessbereichs, welcher nicht zur Prozessüberwachung benötigt wird. Einem übermäßigen Aufheizen der Düse wird entgegengewirkt.

Laserbearbeitungsdüsen stellen üblicherweise Verbrauchsteile dar. Sie müssen im Laufe der Lebensdauer einer Laserbearbeitungseinrichtung mehrfach ausgewechselt werden. Außerdem sind sie meistens speziell für die jeweiligen Bearbeitungsaufgaben gestaltet. Im Falle der erfindungsgemäßen Düse handelt es sich folglich vorteilhafterweise um eine auswechselbare Düse. Die Düse ist vorzugsweise einstückig, insbesondere, abgesehen von einer eventuellen absorbierenden Beschichtung, materialeinheitlich. Bei einer bevorzugten Ausführungsvariante ist die Düse ohne eine integrierte Wasserführung ausgebildet.

Fertigungstechnisch vorteilhaft ist eine Ausgestaltung der Laserbearbeitungsdüse als im Wesentlichen rotationssymetrisches Bauteil. Eine kostengünstige Herstellung als Drehteil wird ermöglicht. Zur Befestigung an der Laserbearbeitungseinrichtung kann die Laserbearbeitungsdüse beispielsweise im Bereich der prozessabgewandten Düsenöffnung mit einem Außengewinde versehen sein.

Vorzugsweise ist der Kontrastabschnitt zumindest teilweise an einem konischen Abschnitt ihrer Innenfläche bzw. der Düsenkanalwandung angeordnet. Der Kontrastabschnitt kann somit zur Formung der Prozessgasströmung dienen und ist zugleich in Detektionsrichtung gut sichtbar. Im Speziellen verläuft er in einem Neigungswinkel zwischen 5° und 15° zum Verlauf des Düsenkanals bzw. der Laserstrahlachse oder Detektionsrichtung.

Bei einer besonders bevorzugten Weiterentwicklung der Erfindung ist der Kontrastabschnitt derart angeordnet, dass durch die Düse hindurch gesehen der Kontrastabschnitt die Düsenöffnung umgibt, welche im Betrieb dem Prozessbereich zugewandt ist. Der Kontrastabschnitt kann folglich im Randbereich der sich in der Detektionseinrichtung ergebenden Abbildung des Prozessbereichs dargestellt werden und kann bei der Auswertung auf einfache Weise zur Vermessung der Düse dienen oder eventuell unberücksichtigt bleiben. Insbesondere ist es für eine möglichst vollständige Unterdrückung von störenden Reflexen vorteilhaft, wenn der Kontrastabschnitt die Düsenöffnung in Blickrichtung parallel zum Verlauf des Düsenkanals gesehen, vollständig umgibt.

Alternativ oder ergänzend ergibt sich für eine Auswertung der Detektoraufnahmen eine vorteilhafte Anordnung, wenn der Kontrastabschnitt durch die Düse hindurch gesehen unmittelbar an die Düsenöffnung angrenzt. Beispielsweise kann der Durchmesser der Düsenöffnung aufgrund des erhöhten Kontrasts zwischen dem Kontrastabschnitt und der Düsenöffnung besonders genau und zuverlässig bestimmt werden.

In diesem Sinne ist es von Vorteil, wenn bei einer Weiterbildung der Erfindung der Kontrastabschnitt bei einer Bauform einer Düse, bei welcher die prozesszugewandte Düsenöffnung an einen zylindrischen Abschnitt des Düsenkanals angrenzt, zumindest auch an diesem zylindrischen Abschnitt angeordnet ist.

Gemäß einem weiteren Aspekt der Erfindung weist eine Laserbearbeitungseinrichtung eine Düse mit einem Kontrastabschnitt und eine Detektionseinrichtung zur Detektion von Strahlung eines durch die Düse definierten Prozessbereichs bei zumindest einer Beobachtungs-Wellenlänge auf, wobei der Kontrastbereich die Strahlung zumindest bei der Beobachtungs-Wellenlänge absorbiert und/oder streut. Vorzugsweise erfolgt durch die Detektionseinrichtung eine koaxial oder zumindest quasi-koaxiale Beobachtung des Prozessbereichs durch die Düse hindurch.

Im Falle einer besonders bevorzugten Weiterentwicklung weist die Laserbearbeitungseinrichtung eine Beleuchtungsvorrichtung auf, mittels derer zumindest der durch die Düse definierte Prozessbereich beleuchtbar ist. Beispielsweise kann die Beleuchtungsvorrichtung den Prozessbereich seitlich beleuchten, also nicht parallel zur Laserstrahlachse. In diesem Fall ist es von besonderem Vorteil, wenn der Kontrastabschnitt der Düse streuend oder absorbierend für die Strahlung der Beleuchtungsvorrichtung bei zumindest einer Wellenlänge wirkt, welche zugleich einer Beobachtungs-Wellenlänge der Detektionseinrichtung entspricht. Damit werden insbesondere störende Licht- bzw. Strahlungsreflexe aufgrund der Beleuchtungsvorrichtung an der Oberfläche der Düse reduziert oder sogar gänzlich verhindert.

Vorzugsweise ist mittels der Beleuchtungsvorrichtung der Prozessbereich durch die

Düse hindurch beleuchtbar, d. h. die Beleuchtung erfolgt koaxial oder zumindest quasi-koaxial. Eine direkte und ungehinderte Beleuchtung des Prozessbereichs ist gewährleistet. Auch bei der koaxialen bzw. quasi-koaxialen Anordnung der Beleuchtungsvorrichtung ist es von Vorteil, wenn der Kontrastabschnitt eine streuende oder/und absorbierende Wirkung auf Strahlung der Beleuchtungsvorrichtung bei einer Wellenlänge hat, welche zugleich einer Beobachtungs-Wellenlänge entspricht. Ein die Strahlung bei zumindest einer detektierten Wellenlänge der Beleuchtungseinrichtung absorbierender Kontrastabschnitt hat zur Folge, dass der beleuchtete Kontrastabschnitt dunkler erscheint und dadurch der Kontrast zum Prozessbereich erhöht wird. Dahingegen wirkt sich ein streuender Kontrastabschnitt derart aus, dass durch die zurückgeworfene Streustrahlung des beleuchteten Kontrastabschnitts, dieser heller erscheint und dadurch der Kontrast zum Prozessbereich erhöht wird.

Die der Düse zugewandte Oberfläche des Werkstückes wird ebenfalls durch die Beleuchtungsvorrichtung beleuchtet und gelangt bei der Werkstückbearbeitung in den Aufnahmebereich der Detektionseinrichtung. Vorzugsweise weist der Kontrastabschnitt der Düse zumindest für Strahlung der Beleuchtungsvorrichtung bei einer Wellenlänge, welche zugleich einer Beobachtungs-Wellenlänge entspricht, einen Reflexionsgrad auf, der sich von dem Reflexionsgrad der Werkstückoberfläche unterscheidet, insbesondere kleiner ist als dieser. Beispielsweise weist der Reflexionsgradunterschied einen Wert von mindestens 0.1, vorzugsweise mindestens 0.3 oder sogar mindestens 0.5 auf.

Im Speziellen weist der Kontrastabschnitt für Strahlung der Beleuchtungsvorrichtung bei einer Wellenlänge, welche zugleich einer Beobachtungs-Wellenlänge entspricht, einen Reflexionsgrad auf, der sich von dem Reflexionsgrad der Oberfläche von Baustahl und/oder Edelstahl um mindestens 0.1, vorzugsweise um mindestens 0.3 oder sogar um mindestens 0.5 unterscheidet, insbesondere um diese Werte kleiner ist als dieser.

Bei einer bevorzugten Ausführungsart der Laserbearbeitungseinrichtung ist eine Aktivierungs-/Deaktivierungseinheit vorgesehen, mittels derer eine Prozessüberwachung durch die Detektionseinrichtung aktivier- und deaktivierbar ist, je nachdem, ob eine eingebaute Düse einen erwarteten Kontrastabschnitt aufweist oder nicht. Auf diese Weise ist sichergestellt, dass die Prozessüberwachung nicht mit einer Düse erfolgt, die mangels Kontrastabschnitt keine ausreichende Qualität des Signals der Detektionseinrichtung gewährleisten kann.

In diesem Sinne wird gemäß einem weiteren Aspekt der Erfindung bei einem Verfahren zur Inbetriebnahme einer Düse an einer Laserbearbeitungseinrichtung, nachdem die Düse an der Bearbeitungseinrichtung angebracht wird, mittels einer Detektionseinrichtung überprüft, ob die Oberfläche der Düse einen erwarteten Kontrastabschnitt aufweist, welcher in Detektionsrichtung für die Detektionseinrichtung sichtbar ist und zumindest für Strahlung bei einer Beobachtungs-Wellenlänge der Detektionseinrichtung eine streuende und/oder absorbierende Wirkung aufweist. Vorzugsweise wird für den Fall, dass die Überprüfung der Düse ergibt, dass die Düse keinen Kontrastabschnitt aufweist, eine Prozessüberwachung durch die Detektionseinrichtung für die nachfolgende Laserbearbeitung unter Verwendung der Düse deaktiviert bzw. erst gar nicht aktiviert.

Im Folgenden wird die Erfindung anhand schematischer Zeichnungen erläutert. Im Einzelnen zeigen:
**Figur 1****:** eine Laserbearbeitungseinrichtung mit einer Laserbearbeitungsdüse und einer Detektionseinrichtung für die Strahlung eines Prozessbereichs
**Figur 2****:** die Laserbearbeitungsdüse der Laserbearbeitungseinrichtung aus Figur 1 in einer mittigen Schnittansicht,
**Figur 3****:** die Laserbearbeitungsdüse der Laserbearbeitungseinrichtung aus Figur 1 in einer Draufsicht auf die dem Prozessbereich abgewandte Düsenöffnung,
**Figur 4****:** eine Laserbearbeitungsdüse für die Laserbearbeitungseinrichtung aus Figur 1 gemäß einer zweiten Bauart in einer Draufsicht auf die dem Prozessbereich abgewandte Düsenöffnung und
**Figur 5****:** ein schematisches Flussdiagramm eines Verfahrens zur Inbetriebnahme einer Laserbearbeitungsdüse auf einer Laserbearbeitungseinrichtung nach Figur 1.

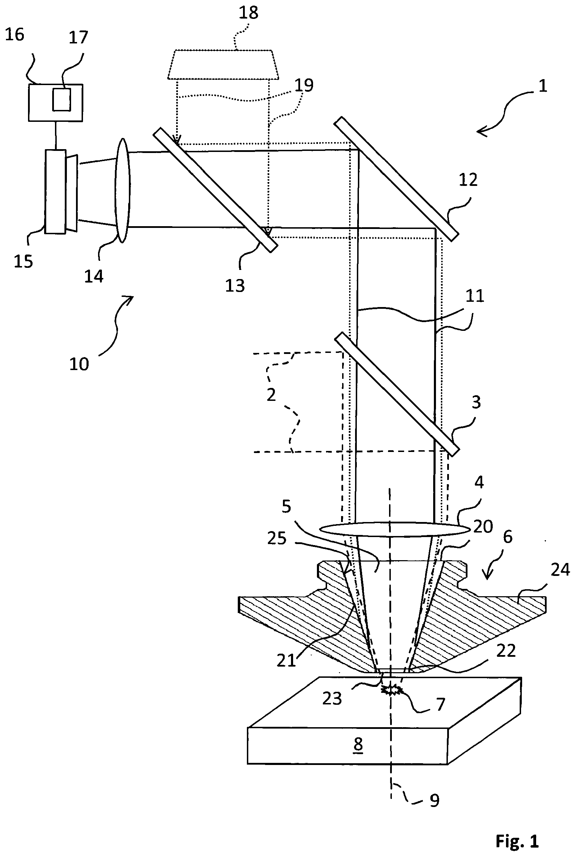

Figur 1 zeigt eine Laserbearbeitungseinrichtung **1,** welche insbesondere zum Laserschneiden oder -schweißen von Metallwerkstücken, wie beispielsweise Metallblechen dient. Die Laserbearbeitungseinrichtung 1 ist Teil einer Laserbearbeitungsanlage, welche beispielsweise einen CO₂-Laser oder einen Festkörperlaser zur Erzeugung eines Laserstrahls **2** umfasst. Der Laserstrahl 2 wird der Laserbearbeitungseinrichtung 1 mittels einer nicht gezeigten Strahlführung zugeführt.

In der Bearbeitungseinrichtung 1 wird der Laserstrahl 2 z. B. an einem teildurchlässigen Umlenkspiegel **3** umgelenkt und trifft nach Passieren einer Fokussierlinse **4** und eines Düsenkanals **5** einer Laserbearbeitungsdüse **6** bei einem Prozessbereich **7** auf ein Werkstück **8.** Beim Passieren des Düsenkanals 5 verläuft der Laserstrahl 2 entlang einer Laserstrahlachse **9.** Die Düse 6 ist an einer Düsenaufnahme befestigt, die aus Übersichtlichkeitsgründen in den Figuren nicht gezeigt ist. Auch weitere Details der Bearbeitungseinrichtung 1, wie z. B. eine Zuführung von Prozessgasen, welche über die Düse dem Prozessbereich 7 zugeleitet werden können, sind aus Übersichtlichkeitsgründen in den Figuren nicht dargestellt.

Die Position des Prozessbereichs 7 auf dem Werkstück 8 kann durch eine Relativbewegung mittels ebenfalls nicht gezeigter Bewegungsvorrichtungen zwischen dem Laserstahl 2 und dem Werkstück 8 variiert werden.

Die Laserbearbeitungseinrichtung 1 weist als Teil einer Vorrichtung zur Prozessüberwachung bzw. -regelung eine Detektionseinrichtung **10** zur Detektion von Strahlung auf, die von dem Prozessbereich 7 reflektiert bzw. emittiert wird.

Mittels der Detektionseinrichtung 10 ist die Strahlung des Prozessbereichs 7 in einer Detektionsrichtung durch die Düse 6 hindurch detektierbar. Die Detektionsrichtung verläuft im Bereich der Düse 6 parallel zur Laserstrahlachse 9 und in Figur 1 von oben nach unten. Die Strahlung des Prozessbereichs 7 wird folglich koaxial ausgekoppelt. Der Verlauf der detektierten Strahlung ist in Figur 1 mit Hilfe von durchgezogenen Linien **11** dargestellt.

Die Auskoppelung erfolgt über den teildurchlässigen Umlenkspiegel 3, welcher z. B. für Strahlung in einem Wellenlängenbereich 500 bis 2000 nm durchlässig ist, jedoch das Laserlicht (CO₂: 10,6 µm, Festkörper: z. B. 1,03 µm) reflektiert. Alternativ kann eine Auskopplung auch mit Hilfe eines Scraper-, Riefen- oder Lochspiegels erfolgen. Um die ausgekoppelte Strahlung einem optischen Detektor der Detektionseinrichtung 10 zu zuleiten, sind ein weiterer Umlenkspiegel **12,** ein teildurchlässiger Umlenkspiegel **13** und eine Linse **14** vorgesehen.

Als optischer Detektor bzw. optischer Sensor dient eine ortsauflösende Nahinfrarot-Kamera **15,** welche z. B. auf Silizium als Halbleitermaterial basiert und mit einem vorgeschalteten Bandpassfilter im nahinfraroten Spektralbereich betrieben wird. Zur Auswertung der Kameraaufnahmen ist eine Auswerteeinheit **16** vorgesehen. Alternativ oder ergänzend zu der ortsauflösenden Kamera 15, kann auch ein anderer optischer Sensor verwendet werden, welcher z. B. über den detektierten Bereich integrierte Intensitätswerte liefert.

Die Innenfläche der Düse 6 bzw. die Düsenkanalwandung weist, ausgehend von einer prozessabgewandten Düsenöffnung **20,** einen konischen Teilabschnitt **21** auf. Ein kurzer zylindrischer Teilabschnitt **22** erstreckt sich zwischen dem konischen Abschnitt 21 und der prozesszugewandten Düsenöffnung **23.**

Aus Figur 1 ist ersichtlich, dass zumindest ein Teil der Innenfläche der Düse 6 bzw. die Düsenkanalwandung, ausgehend von der prozessabgewandten Düsenöffnung 20, insbesondere in Blickrichtung parallel zum Verlauf des Düsenkanals 5, d. h. in Detektionsrichtung, sichtbar ist. Der konische Abschnitt 21 und der zylindrische Abschnitt 22 der Düsenkanalwandung bilden einen Kontrastabschnitt **25.** Er ist mit einer Beschichtung versehen, die im Vergleich zur unbeschichteten Oberfläche des Grundkörpers **24** der Düse 6 für Strahlung zumindest bei der Beobachtungs-Wellenlänge eine absorbierende Wirkung aufweist. Dank der absorbierenden Beschichtung wird wenigstens im signifikanten Umfang verhindert, dass Strahlung zumindest bei der Beobachtungs-Wellenlänge, welche ausgehend von dem Prozessbereich 7 direkt auf den Kontrastabschnitt **25** trifft, dort reflektiert wird. Denn die reflektierte Strahlung würde über die Fokussierlinse 4 usw. zur Kamera 15 gelangen und die Signalqualität der Prozessaufnahmen negativ beeinflussen.

Die gesamte Außenfläche der Düse 6 weist keine Beschichtung auf. Damit eignet sich die Düse 6 gut zur Verwendung mit einer nicht gezeigten kapazitiven Abstandssensorik.

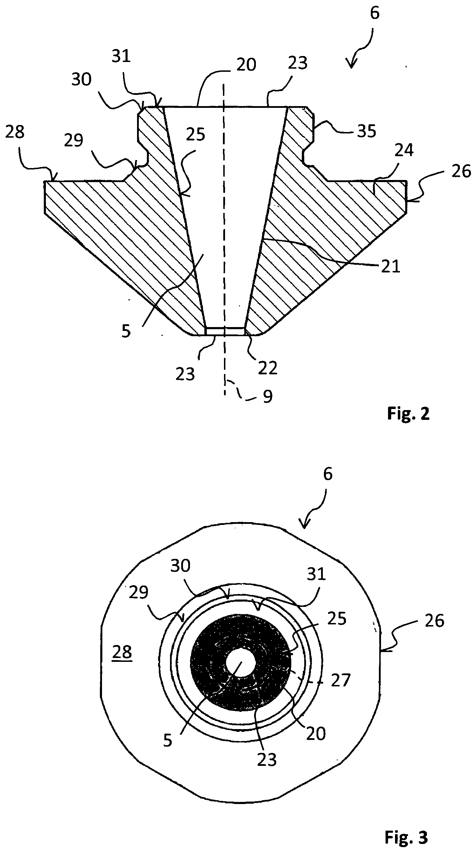

Zum Zwecke einer anschaulichen Darstellung ist die Düse 6 in Figur 1 leicht verzerrt dargestellt. Im Detail wird die Düse 6 daher weiter anhand der Figuren 2 bis 3 beschrieben, welche maßstabgetreue Darstellungen der Düse 6 zeigen.

Die Düse 6 weist einen metallischen Grundkörper 24 aus Kupfer auf. Der mittig durch den Grundkörper 24 geführte Düsenkanal 5 ist rotationssymetrisch um die Laserstrahlachse 9 ausgebildet. Im Bereich der prozessabgewandten Düsenöffnung 20 ist ein nicht im Detail gezeigtes Außengewinde **35** vorgesehen, mittels dessen die Düse 6 auswechselbar an der nicht gezeigten Düsenaufnahme der Bearbeitungseinrichtung 1 befestigt werden kann. Außerdem ist ein äußerer Rand **26** der Düse 6 polygonartig ausgebildet, um eine Angriffsmöglichkeit für ein Werkzeug zum Lösen oder Festschrauben der Düse 6 an der Düsenaufnahme zu bieten.

Die Düsenöffnungen 20, 23 und der gesamte Düsenkanal 5 besitzen kreisförmige Querschnitte. Die prozessabgewandte Düsenöffnung 20 weist beispielsweise einen Durchmesser zwischen 7 bis 10 mm auf, während die prozesszugewandte Düsenöffnung 23 beispielsweise einen Durchmesser von 0,7 bis 3,0 mm aufweist. Der konische Abschnitt 21 verläuft mit einem Neigungswinkel von ca. 11° gegenüber dem Verlauf des Düsenkanals 5.

In Figur 3 ist die Düse 6 in einer Draufsicht parallel zum Verlauf des Düsenkanals 5 auf die prozessabgewandte Düsenöffnung 20 gezeigt. Aus dieser Blickrichtung, welche der Detektionsrichtung der Detektionseinrichtung 10 entspricht, umgibt der Kontrastabschnitt 25 die prozesszugewandte Düsenöffnung 23 vollständig. Durch einen gestrichelten Kreis **27** ist der durch die Kamera 15 aufgenommene Bereich angedeutet. In diesem Aufnahmebereich 27 bildet der Kontrastabschnitt 25 den unmittelbar an die Düsenöffnung 20 angrenzenden Randbereich.

Im Übrigen sind in Figur 3 von radial außen nach innen eine umlaufende äußere Ringfläche **28,** zwei geneigte Ringflächen **29, 30** und eine die prozessabgewandte Düsenöffnung 20 umgebende Ringfläche **31** zu sehen.

Bei der Düse 6 gemäß den Figuren 1 bis 3 handelt sich um eine Düse 6, die eine absorbierende Beschichtung zumindest nahezu auf der gesamten Düsenkanalwandung aufweist. Die übrige Oberfläche der Düse 6 weist aber keine Beschichtung auf.

Um eine Absorption von Prozessstrahlung, die für die Prozessüberwachung nicht genutzt wird, zu vermeiden, ist der Kontrastabschnitt 25 vorzugsweise mit einer Strahlung bei der Beobachtungs-Wellenlänge absorbierenden Beschichtung versehen, die für Strahlung mit einer Wellenlänge von größer als 2000 nm nicht bzw. nur in einem geringen Umfang absorbierend ist.

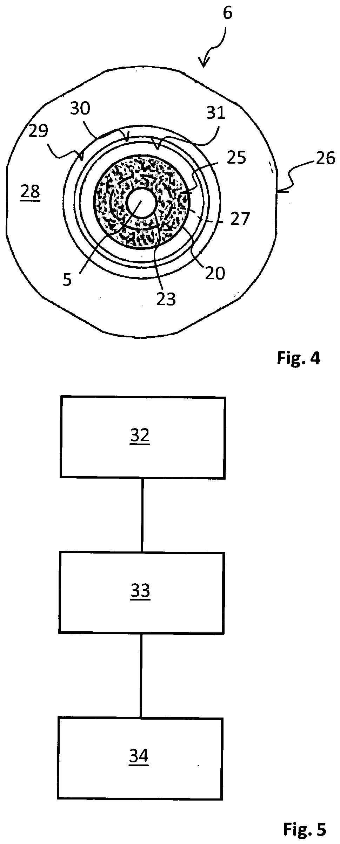

In Figur 4 ist eine zweite Düse 6 gezeigt, die sich von der in den Figuren 1 bis 3 gezeigten Düse 6 nur dadurch unterscheidet, dass die als Kontrastabschnitt 25 ausgebildete Düsenkanalwandung anstelle einer absorbierenden Beschichtung eine Oberflächenstruktur aufweist, die zumindest für die Beobachtungs-Wellenlänge eine streuende Wirkung erzielt. Im Übrigen ist die Düse 6 gemäß Figur 4 identisch zu der Düse 6 gemäß den Figuren 1 bis 3 aufgebaut.

In Figur 5 sind Schritte eines Verfahrens zur Inbetriebnahme einer Düse 6 an der Laserbearbeitungseinrichtung 1 aufgeführt. In einem ersten Schritt **32** wird die Düse 6 an der Düsenaufnahme der Laserbearbeitungseinrichtung 1 befestigt. In einem zweiten Schritt **33** wird mittels der Detektionseinrichtung 10 überprüft, ob die Innenfläche der Düse 6 einen erwarteten Kontrastabschnitt 25 aufweist. In einem dritten Schritt **34** wird für den Fall, dass die Düse 6 den erwarteten Kontrastabschnitt 25 aufweist, eine Prozessüberwachung unter Verwendung der Detektionseinrichtung 10 für die nachfolgende Laserbearbeitung mit Hilfe der überprüften Düse 6 aktiviert bzw. nicht deaktiviert. Andernfalls wird die Prozessüberwachung deaktiviert bzw. nicht aktiviert.

Zu diesem Zweck weist die Auswerteeinheit 16 eine in Figur 1 angedeutete Aktivierungs-/Deaktivierungseinheit **17** auf. Die Überwachung des Prozessbereichs 7 erfolgt bei einer Beobachtungs-Wellenlänge zwischen beispielsweise 300 und 1100 nm. Alternativ oder ergänzend kann die Laserbearbeitungseinrichtung 1 eine Detektionseinrichtung 10 zur Überwachung bei einer anderen Beobachtungs-Wellenlänge zwischen beispielsweise 900 und 1700 nm umfassen. Folglich weist der Kontrastabschnitt 25 der Düse 6 vorteilhaftweise eine absorbierende Wirkung, insbesondere durch eine absorbierende Beschichtung, für Strahlung zumindest bei den jeweiligen Beobachtungs-Wellenlängen auf.

Optional kann die Laserbearbeitungseinrichtung 1 auch eine Beleuchtungsvorrichtung **18** aufweisen, mittels derer zumindest der Prozessbereich 7 beleuchtbar ist. In Figur 1 ist optional eine Beleuchtungsvorrichtung 18 angedeutet, mittels derer der Prozessbereich 7 durch die Düse 6 hindurch beleuchtet werden kann. Der Verlauf des Beleuchtungslichtes ist in Figur 1 durch gestrichelte Linien **19** angedeutet. Damit aufgrund der Beleuchtung die Signalqualität der Detektionseinrichtung 10 erhöht wird, sollte die Beleuchtung mit Strahlung zumindest bei einer Wellenlänge erfolgen, die der Beobachtung-Wellenlänge der Detektionseinrichtung 10 entspricht.

## Patentansprüche

1. Laserbearbeitungsdüse (6) für eine Laserbearbeitungseinrichtung (1), wobei die Laserbearbeitungseinrichtung (1) zur Prozessüberwachung eine Detektionseinrichtung (10) zur Detektion von Strahlung eines durch die Laserbearbeitungsdüse (6) definierten Prozessbereichs (7) aufweist, **dadurch gekennzeichnet, dass** die Laserbearbeitungsdüse (6) einen metallischen Grundkörper (24), insbesondere aus Kupfer, aufweist, auf dessen Oberfläche zur Ausbildung eines Kontrastabschnitts (25) eine für Strahlung zumindest bei einer Beobachtungs-Wellenlänge zwischen 300 und 1100 nm und/oder für Strahlung zumindest bei einer Beobachtungs-Wellenlänge zwischen 900 und 1700 nm absorbierende Beschichtung aufgebracht und/oder eine streuende Oberflächenstruktur gebildet ist.

2. Laserbearbeitungsdüse (6) nach einem der vorigen Ansprüche, **dadurch gekennzeichnet, dass** der Kontrastabschnitt (25) derart auf der Laserbearbeitungsdüse (6) angeordnet ist, dass von dem Prozessbereich (7) ausgehende Strahlung direkt auf den Kontrastabschnitt (25) auftreffen kann.

3. Laserbearbeitungsdüse (6) nach einem der vorigen Ansprüche, **dadurch gekennzeichnet, dass** der Kontrastabschnitt (25) derart auf der Laserbearbeitungsdüse (6) angeordnet ist, dass der Kontrastabschnitt (25) in einem Aufnahmebereich (27) einer Detektionseinrichtung zur Detektion von Strahlung des Prozessbereichs (7) anordenbar ist.

4. Laserbearbeitungsdüse (6) nach einem der vorigen Ansprüche, **dadurch gekennzeichnet, dass** die Laserbearbeitungsdüse (6) derart ausgebildet ist, dass die Strahlung des Prozessbereichs (7) mittels der Detektionseinrichtung (10) durch einen zwischen zwei Düsenöffnungen (20, 23) verlaufenden Düsenkanal (5) der Laserbearbeitungsdüse (6) hindurch detektierbar ist, und der Kontrastabschnitt (25) derart an der Düsenkanalwandung angeordnet ist, dass der Kontrastabschnitt (25) ausgehend von derjenigen Düsenöffnung (20), welche im Betrieb dem Prozessbereich (7) abgewandt ist, sichtbar ist.

5. Laserbearbeitungsdüse (6) nach einem der vorigen Ansprüche, **dadurch gekennzeichnet, dass** der Kontrastabschnitt (25) mittels einer Beschichtung eine absorbierende Wirkung für Strahlung bei der Beobachtungs-Wellenlänge aufweist.

6. Laserbearbeitungsdüse (6) nach Anspruch 4, **dadurch gekennzeichnet, dass** zumindest ein im Betrieb dem Prozessbereich (7) zugewandter Teil der Außenfläche der Laserbearbeitungsdüse (6) keine Beschichtung wie der Kontrastabschnitt (25) aufweist.

7. Laserbearbeitungsdüse (6) nach einem der vorigen Ansprüche, **dadurch gekennzeichnet, dass** der Kontrastabschnitt (25) eine absorbierende Wirkung für Strahlung zumindest bei einer Beobachtungs-Wellenlänge aufweist, wobei der Kontrastabschnitt Strahlung mit einer Wellenlänge von größer als 2000 nm nicht bzw. nur in einem geringen Umfang absorbiert.

8. Laserbearbeitungsdüse (6) nach einem der vorigen Ansprüche, **dadurch gekennzeichnet, dass** der Kontrastabschnitt (25) eine absorbierende Wirkung für Strahlung zumindest bei einer Beobachtungs-Wellenlänge aufweist, wobei der Kontrastabschnitt (25) Strahlung mit einer Wellenlänge des Laserstrahls der Laserbearbeitungseinrichtung (1), für welche die Laserbearbeitungsdüse (6) vorgesehen ist, nicht bzw. nur in einem geringen Umfang absorbiert.

9. Laserbearbeitungsdüse (6) nach einem der vorigen Ansprüche, **dadurch gekennzeichnet, dass** der Kontrastabschnitt (25) derart angeordnet ist, dass in einer Blickrichtung durch die Laserbearbeitungsdüse (6) hindurch gesehen der Kontrastabschnitt (25) die Düsenöffnung (23), welche im Betrieb dem Prozessbereich (7) zugewandt ist, umgibt, insbesondere vollständig umgibt, und/oder in einer Blickrichtung durch die Laserbearbeitungsdüse (6) hindurch gesehen der Kontrastabschnitt (25) unmittelbar an die Düsenöffnung (23), welche im Betrieb dem Prozessbereich (7) zugewandt ist, angrenzt.

10. Laserbearbeitungseinrichtung (1) mit einer Laserbearbeitungsdüse (6) nach einem der vorigen Ansprüche, wobei die Laserbearbeitungseinrichtung (1) eine Detektionseinrichtung (10) zur Detektion von Strahlung eines durch die Laserbearbeitungsdüse (6) definierten Prozessbereichs (7) bei zumindest einer Beobachtungs-Wellenlänge aufweist, wobei der Kontrastabschnitt (25) der Laserbearbeitungsdüse (6) für Strahlung zumindest bei der Beobachtungs- Wellenlänge der Detektionseinrichtung (10) eine streuende und/oder absorbierende Wirkung aufweist.

11. Laserbearbeitungseinrichtung (1) nach Anspruch 10, **dadurch gekennzeichnet, dass** die Strahlung des Prozessbereichs (7) mittels der Detektionseinrichtung (10) durch einen zwischen zwei Düsenöffnungen (20, 23) verlaufenden Düsenkanal (5) der Laserbearbeitungsdüse (6) hindurch detektierbar ist.

12. Laserbearbeitungseinrichtung (1) nach einem der Ansprüche 10 oder 11, **dadurch gekennzeichnet, dass** eine Beleuchtungsvorrichtung (18) vorgesehen ist, mittels derer der Prozessbereich (7) mit Strahlung bei zumindest einer Beleuchtungs-Wellenlänge beleuchtet werden kann, welche der Beobachtungs-Wellenlänge entspricht, wobei mittels der Beleuchtungsvorrichtung (18) der Prozessbereich (7) insbesondere durch die Laserbearbeitungsdüse (6) hindurch beleuchtet werden kann.

13. Verfahren zur Inbetriebnahme einer Laserbearbeitungsdüse (6) an einer Laserbearbeitungseinrichtung (1), wobei eine Laserbearbeitungsdüse (6) an der Laserbearbeitungseinrichtung (1) angebracht wird, und anschließend mittels der Detektionseinrichtung (10) überprüft wird, ob die Laserbearbeitungsdüse (6) einen Kontrastabschnitt (25) aufweist, und somit ob die Laserbearbeitungsdüse eine Laserbearbeitungsdüse (6) nach einem der Ansprüche 1 bis 9 ist, und insbesondere abhängig von dem Ergebnis der Überprüfung eine Prozessüberwachung durch die Detektionseinrichtung (10) für die nachfolgende Laserbearbeitung aktiviert bzw. deaktiviert wird.

## Claims

1. A laser machining nozzle (6) for a laser machining device (1), the laser machining device (1) having a detection device (10) for detecting radiation from a process zone (7) defined by the laser machining nozzle (6) for process monitoring, **characterized in that** the laser machining nozzle (6) has a metallic base (24), in particular of copper, to the surface of which, for forming a contrast section (25), a coating that is absorbent to radiation at least at an observation wavelength between 300 and 1100 nm and/or for radiation at least at an observation wavelength between 900 and 1700 nm is applied and/or a scattering surface structure is formed.

2. The laser machining nozzle (6) as claimed in one of the preceding claims, **characterized in that** the contrast section (25) is arranged on the laser machining nozzle (6) in such a way that radiation originating from the process zone (7) can strike the contrast section (25) directly.

3. The laser machining nozzle (6) as claimed in one of the preceding claims, **characterized in that** the contrast section (25) is arranged on the laser machining nozzle (6) in such a way that the contrast section (25) can be arranged in a recording area (27) of a detection device for the detection of radiation from the process zone (7).

4. The laser machining nozzle (6) as claimed in one of the preceding claims, **characterized in that** the laser machining nozzle (6) is configured in such a way that the radiation from the process zone (7) can be detected by means of the detection device (10) through a nozzle channel (5) of the laser machining nozzle (6) that extends between two nozzle openings (20, 23), and the contrast section (25) is arranged on the nozzle channel wall in such a way that the contrast section (25) is visible from that nozzle opening (20) which faces away from the process zone (7) during operation.

5. The laser machining nozzle (6) as claimed in one of the preceding claims, **characterized in that** the contrast section (25) has an absorbing effect for radiation at the observation wavelength, by virtue of a coating.

6. The laser machining nozzle (6) as claimed in claim 4, **characterized in that** at least part of the outer surface of the laser machining nozzle (6) that faces the process zone (7) during operation has no coating like the contrast section (25).

7. The laser machining nozzle (6) as claimed in one of the preceding claims, **characterized in that** the contrast section (25) has an absorbing effect for radiation at least at an observation wavelength, wherein radiation with a wavelength of greater than 2000 nm is not absorbed or absorbed only to a low extent by the contrast section.

8. The laser machining nozzle (6) as claimed in one of the preceding claims, **characterized in that** the contrast section (25) has an absorbing effect for radiation at least at an observation wavelength, wherein radiation with a wavelength of the laser beam of the laser machining device (1) for which the laser machining nozzle (6) is provided is not absorbed or absorbed only to a low extent by the contrast section (25).

9. The laser machining nozzle (6) as claimed in one of the preceding claims, **characterized in that** the contrast section (25) is arranged in such a way that, as viewed in a viewing direction through the laser machining nozzle (6), the contrast section (25) surrounds, in particular completely surrounds, the nozzle opening (23) which faces the process zone (7) during operation and/or, as viewed in a viewing direction through the laser machining nozzle (6), the contrast section (25) directly adjoins the nozzle opening (23) which faces the process zone (7) during operation.

10. A laser machining device (1) having a laser machining nozzle (6) as claimed in one of the preceding claims, wherein the laser machining device (1) has a detection device (10) for detecting radiation from a process zone (7) defined by the laser machining nozzle (6) at at least one observation wavelength, wherein the contrast section (25) of the laser machining nozzle (6) has a scattering and/or absorbing effect for radiation, at least at the observation wavelength of the detection device (10).

11. The laser machining device (1) as claimed in claim 10, **characterized in that** the radiation from the process zone (7) can be detected by means of the detection device (10) through a nozzle channel (5) of the laser machining nozzle (6) that extends between two nozzle openings (20, 23).

12. The laser machining device (1) as claimed in claim 10 or 11, **characterized in that** an illuminating apparatus (18) by means of which the process zone (7) can be illuminated with radiation at at least one illumination wavelength which corresponds to the observation wavelength is provided, wherein, by means of the illuminating apparatus (18), the process zone (7) can be illuminated, in particular through the laser machining nozzle (6).

13. A method for commissioning a laser machining nozzle (6) on a laser machining device (1), wherein a laser machining nozzle (6) is fitted to the laser machining device (1) and a check is then made by means of the detection device (10) as to whether the laser machining nozzle (6) has a contrast section (25) and thus whether the laser machining nozzle is a laser machining nozzle (6) as claimed in one of claims 1 to 9 and process monitoring by the detection device (10) is activated or deactivated for the following laser machining, in particular depending on the result of the check.

## Revendications

1. Buse (6) d'usinage au laser destinée à un dispositif (1) d'usinage au laser, ledit dispositif (1) d'usinage au laser étant muni, en vue de la surveillance de processus, d'un dispositif de détection (10) affecté à la détection de rayonnement d'une zone d'opérations (7) bien définie par ladite buse (6) d'usinage au laser, **caractérisée par le fait que** ladite buse (6) d'usinage au laser présente un corps de base (24) en métal, notamment en du cuivre, sur la surface duquel est déposé un revêtement absorbant un rayonnement au moins en présence d'une longueur d'ondes d'observation comprise entre 300 et 1 100 nm et/ou un rayonnement au moins en présence d'une longueur d'ondes d'observation comprise entre 900 et 1 700 nm, et/ou est ménagée une structure superficielle diffusive, de manière à former une zone de contraste (25).

2. Buse (6) d'usinage au laser selon la revendication 1, **caractérisée par le fait que** la zone de contraste (25) occupe, sur ladite buse (6) d'usinage au laser, un emplacement tel que du rayonnement émanant de la zone d'opérations (7) puisse venir incider directement sur ladite zone de contraste (25).

3. Buse (6) d'usinage au laser selon l'une des revendications précédentes, **caractérisée par le fait que** la zone de contraste (25) occupe, sur ladite buse (6) d'usinage au laser, un emplacement tel que ladite zone de contraste (25) puisse être placée dans une zone réceptrice (27) d'un dispositif de détection affecté à la détection de rayonnement de la zone d'opérations (7).

4. Buse (6) d'usinage au laser selon l'une des revendications précédentes, **caractérisée par le fait que** ladite buse (6) d'usinage au laser est réalisée de façon telle que le rayonnement de la zone d'opérations (7) puisse être détecté, au moyen du dispositif de détection (10), par l'intermédiaire d'un canal (5) parcourant ladite buse (6) d'usinage au laser entre deux orifices (20, 23) de ladite buse, et que la zone de contraste (25) occupe, sur la paroi dudit canal de la buse, un emplacement tel que ladite zone de contraste (25) soit visible à partir de l'orifice (20) de ladite buse qui est tourné, en service, à l'opposé de ladite zone d'opérations (7).

5. Buse (6) d'usinage au laser selon l'une des revendications précédentes, **caractérisée par le fait que** la zone de contraste (25) exerce, au moyen d'un revêtement, un effet d'absorption de rayonnement en présence de la longueur d'ondes d'observation.

6. Buse (6) d'usinage au laser selon la revendication 4, **caractérisée par le fait qu'**au moins une partie de la surface extérieure de ladite buse (6) d'usinage au laser, tournée en service vers la zone d'opérations (7), est dépourvue de revêtement tel que celui de la zone de contraste (25).

7. Buse (6) d'usinage au laser selon l'une des revendications précédentes, **caractérisée par le fait que** la zone de contraste (25) exerce un effet d'absorption de rayonnement au moins en présence d'une longueur d'ondes d'observation, sachant que ladite zone de contraste n'absorbe pas ou, respectivement, n'absorbe que dans une faible mesure un rayonnement présentant une longueur d'ondes supérieure à 2 000 nm.

8. Buse (6) d'usinage au laser selon l'une des revendications précédentes, **caractérisée par le fait que** la zone de contraste (25) exerce un effet d'absorption de rayonnement au moins en présence d'une longueur d'ondes d'observation, sachant que ladite zone de contraste (25) n'absorbe pas ou, respectivement, n'absorbe que dans une faible mesure un rayonnement présentant une longueur d'ondes du rayon laser du dispositif (1) d'usinage au laser pour lequel ladite buse (6) d'usinage au laser est prévue.

9. Buse (6) d'usinage au laser selon l'une des revendications précédentes, **caractérisée par le fait que** la zone de contraste (25) occupe un emplacement tel que, en considérant dans une direction d'observation à travers ladite buse (6) d'usinage au laser, ladite zone de contraste (25) entoure, en particulier intégralement, l'orifice (23) de ladite buse qui est tourné en service vers la zone d'opérations (7) ; et/ou que, en considérant dans une direction d'observation à travers ladite buse (6) d'usinage au laser, ladite zone de contraste (25) soit directement limitrophe dudit orifice (23) de ladite buse qui est tourné en service vers ladite zone d'opérations (7).

10. Dispositif (1) d'usinage au laser équipé d'une buse (6) d'usinage au laser conforme à l'une des revendications précédentes, ledit dispositif (1) d'usinage au laser étant muni d'un dispositif de détection (10) affecté à la détection de rayonnement d'une zone d'opérations (7) bien définie par ladite buse (6) d'usinage au laser, en présence d'au moins une longueur d'ondes d'observation, la zone de contraste (25) de ladite buse (6) d'usinage au laser exerçant un effet de diffusion et/ou d'absorption de rayonnement, au moins en présence de la longueur d'ondes d'observation dudit dispositif de détection (10).

11. Dispositif (1) d'usinage au laser selon la revendication 10, **caractérisé par le fait que** le rayonnement de la zone d'opérations (7) peut être détecté, au moyen du dispositif de détection (10), par l'intermédiaire d'un canal (5) parcourant ladite buse (6) d'usinage au laser entre deux orifices (20, 23) de ladite buse.

12. Dispositif (1) d'usinage au laser selon l'une des revendications 10 ou 11, **caractérisé par le fait qu'**il est prévu un dispositif d'éclairage (18) au moyen duquel la zone d'opérations (7) peut être éclairée par un rayonnement, en présence d'au moins une longueur d'ondes d'éclairage correspondant à la longueur d'ondes d'observation, ladite zone d'opérations (7) pouvant être éclairée, au moyen dudit dispositif d'éclairage (18), en particulier à travers la buse (6) d'usinage au laser.

13. Procédé de mise en fonction d'une buse (6) d'usinage au laser sur un dispositif (1) d'usinage au laser, une buse (6) d'usinage au laser étant mise en place sur ledit dispositif (1) d'usinage au laser et étant ensuite soumise, au moyen du dispositif de détection (10), à un contrôle visant à établir si ladite buse (6) d'usinage au laser est dotée d'une zone de contraste (25) et, en conséquence, si ladite buse d'usinage au laser est une buse (6) d'usinage au laser conforme à l'une des revendications 1 à 9, sachant que, notamment en fonction du résultat dudit contrôle, une surveillance de processus est respectivement activée ou désactivée pour l'usinage au laser successif, par l'intermédiaire dudit dispositif de détection (10).
